(19) Europäisches Patentamt

European Patent Office

Office européen des brevets

(11) **EP 4 745 618 A1**

(12) **EUROPEAN PATENT APPLICATION**

(43) Date of publication:
**20.05.2026 Bulletin 2026/21**

(21) Application number: 25216667.3

(22) Date of filing: **18.11.2025**

(51) International Patent Classification (IPC):
*G01S 7/35* $^{(2006.01)}$     *G01S 13/32* $^{(2006.01)}$
*G01S 13/42* $^{(2006.01)}$     *G01S 13/58* $^{(2006.01)}$

(52) Cooperative Patent Classification (CPC):
**G01S 13/32; G01S 7/356; G01S 13/325;
G01S 13/42; G01S 13/584**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.11.2024 KR 20240165491**

(71) Applicant: **bitsensing Inc
Seongnam-si, Gyeonggi-do 13105 (KR)**

(72) Inventors:
• **PARK, Jeong Ki
06720 Seoul (KR)**
• **KO, Chan Bin
05215 Seoul (KR)**
• **PARK, Rae Seung
22218 Incheon (KR)**

(74) Representative: **BCKIP Part mbB
Landsberger Straße 98
80339 München (DE)**

(54) **RADAR DEVICE AND METHOD OF PROCESSING RADAR SIGNAL**

(57) A radar device includes a plurality of transmit antennas; a plurality of receive antennas; and a monolithic microwave integrated circuit (MMIC) connected to the plurality of transmit antennas and the plurality of receive antennas, and configured to control the plurality of transmit antennas and the plurality of receive antennas, wherein the MMIC is configured to: transmit radar signals through the plurality of transmit antennas according to a Doppler division multiple access (DDMA); receive reflected signals, which are at least a part of the radar signals reflected from a target, through the plurality of receive antennas; match the received reflected signals with the plurality of transmit antennas based on a phase offset corresponding to at least one connection path between the MMIC and the plurality of transmit antennas and the plurality of receive antennas; and acquire radar data corresponding to the target based on the matching result.

**EP 4 745 618 A1**

**Description**

**CROSS-REFERENCE TO RELATED APPLICATION**

This application claims the benefit of Korean Patent Application No. 10-2024-0165491 filed on November 19, 2024 in the Korean Intellectual Property Office.

**TECHNICAL FIELD**

The present disclosure relates to a radar device and a method of processing a radar signal.

**BACKGROUND**

A radar device needs to have high angular resolution to detect or track the distance, velocity, and angle of a target by transmitting and receiving electronic waves. Conventional radar devices have a structure in which a plurality of transmit antennas and a plurality of receive antennas are arrayed to increase angular resolution.

A frequency-modulated continuous wave (FMCW) radar device uses a transmit signal whose transmit frequency is ramp-modulated, and such a signal is transmitted continuously during the ramp. Also, the FMCW radar device generates a baseband signal from a receive signal through mixing with the transmit signal. A frequency of the baseband signal corresponds to a frequency difference between a signal transmitted at a given time point and a signal received at the same time point. Herein, due to frequency modulation of the transmit signal, this frequency difference depends on the runtime of a signal directed from the radar device to a target or reflected from the target. Due to the Doppler effect, the frequency difference also contains a component that results from the relative velocity of the target.

MIMO (Multi Input Multi Output) is a technique widely used to enlarge an effective aperture size of a radar device by synthesizing a virtual receiver array by combination of a plurality of physically implemented transmitter channels and receiver channels. However, it has been difficult for the FMCW radar device with the MIMO to differentiate among signals transmitted from a plurality of transmit antennas.

**PRIOR ART DOCUMENT**

**PATENT DOCUMENT**

Patent document 1: US Patent Laid-open Publication No. 2022/0334240 A1

**SUMMARY**

In view of the foregoing, the present disclosure is conceived to improve a target detection probability of a radar signal transmitted from a radar device based on Doppler division multiple access (DDMA).

The present disclosure is also conceived to match reflected signals received from a plurality of receive antennas included in a radar device to a plurality of transmit antennas, and to acquire radar data corresponding to a target based on the matching result.

The problems to be solved by the present disclosure are not limited to the above-described problems. There may be other problems to be solved by the present disclosure.

According to an exemplary embodiment, a radar device may include a plurality of transmit antennas; a plurality of receive antennas; and a monolithic microwave integrated circuit (MMIC) connected to the plurality of transmit antennas and the plurality of receive antennas, and configured to control the plurality of transmit antennas and the plurality of receive antennas, wherein the MMIC is configured to: transmit radar signals through the plurality of transmit antennas according to a Doppler division multiple access (DDMA); receive reflected signals, which are at least a part of the radar signals reflected from a target, through the plurality of receive antennas; match the received reflected signals with the plurality of transmit antennas based on a phase offset corresponding to at least one connection path between the MMIC and the plurality of transmit antennas and the plurality of receive antennas; and acquire radar data corresponding to the target based on the matching result.

According to another exemplary embodiment, a method of processing a radar signal may include transmitting radar signals through a plurality of transmit antennas according to a DDMA; receiving reflected signals, which are at least a part of the radar signals reflected from a target, through a plurality of receive antennas; matching the received reflected signals with the plurality of transmit antennas based on a phase offset corresponding to at least one connection path between an MMIC and the plurality of transmit antennas and the plurality of receive antennas; and acquiring radar data corresponding to the target based on the matching result.

According to an embodiment of the present disclosure, it is possible to differentiate among physical transmit antennas in a DDMA mode of a radar device, and also possible to improve a signal-to-noise ratio (SNR) for peaks by integrating data in the transmit antennas.

Further, according to an embodiment of the present disclosure, it is possible to improve a target detection probability by applying a uniform phase step in a Doppler axis direction, and also possible to reduce the computation amount of data processing.

## BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.

**FIG. 1** is a configuration diagram illustrating a radar device according to an embodiment of the present disclosure.

**FIG. 2** is a time-frequency graph of a radar signal according to the embodiment of the present disclosure.

**FIG. 3A** shows graphs of Doppler division multiple access (DDMA) transmit signals according to the embodiment of the present disclosure.

**FIG. 3B** shows graphs of time division multiple access (TDMA) transmit signals according to a comparative example of the present disclosure.

**FIG. 4A** is a range-Doppler map (R-D Map) of DDMA reflected signals according to the embodiment of the present disclosure.

**FIG. 4B** is an R-D Map of TDMA reflected signals according to the comparative example of the present disclosure.

**FIG. 5A** is an R-D Map of reflected signals corresponding to transmit signals with a uniform phase step according to the embodiment of the present disclosure, and **FIG. 5B** is a portion of **FIG. 5A.**

**FIG. 5C** is an R-D Map of reflected signals corresponding to transmit signals with a non-uniform phase step according to the comparative example of the present disclosure, and **FIG. 5D** is a portion of **FIG. 5C.**

**FIG. 6A** is an R-D Map in which 2D FFT data of reflected signals are integrated according to an embodiment of the present disclosure.

**FIG. 6B** and **FIG. 6C** are examples of the R-D Map of **FIG. 6A** after one-dimensional floating.

**FIG. 7A** is an R-D map for a single target according to an embodiment of the present disclosure.

**FIG. 7B** illustrates a sequential phase sum obtained by summing phase components of each of a plurality of receive antennas for a single target according to the embodiment of the present disclosure.

**FIG. 8A** is a graph showing phases of signals received over time through different channels of a radar device according to an embodiment of the present disclosure.

**FIG. 8B** shows fast Fourier transform (FFT) results of signals received through the different channels of the radar device according to the embodiment of the present disclosure.

**FIG. 9** is a configuration diagram illustrating an MMIC connected to a plurality of transmit antennas and a plurality of receive antennas according to an embodiment of the present disclosure.

**FIG. 10A** is a range-velocity map (R-V map) for a single target based on the number of a plurality of transmit antennas according to an embodiment of the present disclosure.

**FIG. 10B** is a graph showing a sum of phase offsets across a plurality of receive antennas of a radar device according to the embodiment of the present disclosure.

**FIG. 10C** shows graphs showing a sequence of sequential phase sums based on the number of the plurality of transmit antennas according to the embodiment of the present disclosure.

**FIG. 10D** is a graph showing a cost function based on a sequential phase sum and the number of the plurality of transmit antennas according to the embodiment of the present disclosure.

**FIG. 10E** is an R-V map in which a peak corresponding to a first transmit antenna is matched according to the embodiment of the present disclosure.

**FIG. 11** is an R-D Map showing 2D FFT data of reflected signals integrated in each of a transmit antenna and a receive antenna according to an embodiment of the present disclosure.

**FIG. 12** is a flowchart showing a method of processing a radar signal according to an embodiment of the present disclosure.

## DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, when a member is said to be located "on" another member, this includes not only the case where the member is in contact with the other member, but also the case where another member exists between the two members.

Through the whole document, when a part "comprises or includes" a certain components, this means that it may further include other components rather than excluding other components unless specifically stated to the contrary.

As used through the whole document, the terms "about", "substantially", etc. are used to mean at or close to that value when manufacturing and material tolerances inherent to the stated meaning are presented, it is used to prevent unscrupulous infringers from taking unfair advantage of disclosures in which precise or absolute figures are mentioned to help understanding of the present disclosure. The term "step of" as used through the whole document does not mean "step for."

Throughout the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Through the whole document, references to "A and/or B" mean "A or B, or A and B."

Hereinafter, embodiments of the present disclosure will be described in detail with reference to the accompanying drawings. However, the present disclosure may not be limited to these implementations, examples, and drawings.

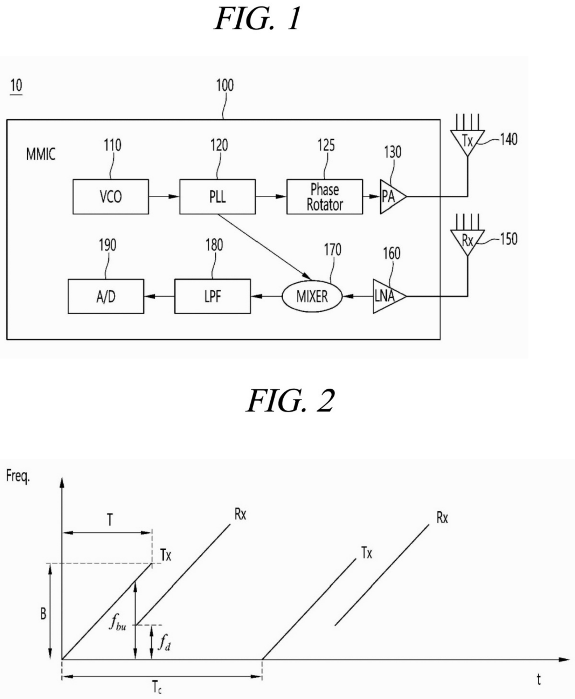

**FIG. 1** is a configuration diagram illustrating a radar device 10 according to an embodiment of the present disclosure.

Referring to **FIG. 1,** the radar device 10 according to an embodiment may be configured to transmit and/or receive a radar signal output from a monolithic microwave integrated circuit (MMIC) 100 through a transmit antenna circuit 140 and/or a receive antenna circuit 150.

In an embodiment, the MMIC 100 may be configured to generate and transmit a radar signal (e.g., a transmit signal). In an embodiment, the MMIC 100 may be configured to receive a radar signal (e.g., a reflected signal) from the outside. For example, the radar signal may be an electromagnetic spectrum with mm-wave frequencies or in a frequency range of from 3 MHz to 300 GHz.

In an embodiment, the MMIC 100 may be connected to the transmit antenna circuit 140 including a plurality of transmit antennas and the receive antenna circuit 150 including a plurality of receive antennas, thereby forming a transmission path and a reception path.

In an embodiment, the radar device 10 may be configured to transition or guide a radar signal generated by the MMIC 100 to a plurality of transmit antennas, and/or to transition or guide a radar signal received from a plurality of receive antennas to the MMIC 100.

In an embodiment, the radar device 10 may serve as a multiple-input multiple-output (MIMO) radar for proper transmit antenna spacing, and can emulate a larger aperture phased array radar. This larger array may be referred to as a virtual array.

In an embodiment, the MMIC 100 may be a microwave integrated circuit including a voltage controlled oscillator (VCO) 110, a phase locked loop (PLL) 120, a power amplifier (PA) 130, the transmit antenna circuit 140, the receive antenna circuit 150, a low noise amplifier (LNA) 160, a MIXER 170, a low phase filter (LPF) 180, and/or an analog-to-digital converter (A/D) 190.

The VCO 110 is an oscillator configured to generate a variable frequency that is linearly proportional to an input controlled voltage, and may generate a sine wave whose frequency increases linearly with voltage by varying the input controlled voltage and controlling an output oscillation frequency.

The PLL 120 is a circuit configured to synchronize an output signal with a frequency and a phase of an input signal by reducing a phase variation rather than an amplitude, and may perform phase drift correction and frequency up-conversion.

A phase rotator 125 is configured to generate a phase change of a transmit signal or a reflected signal. The phase rotator 125 may apply a phase shift with a predetermined magnitude to a transmit signal transmitted through the transmit antenna circuit 140.

The PA 130 is configured to generate a high output power, and may amplify a radar signal. The transmit antenna circuit 140 may radiate the radar signal, which has been amplified by the PA 130, to the outside. In an embodiment, the transmit antenna circuit 140 may include a plurality of transmit antennas (*e.g.*, 4 Tx).

At least a part of the radar signal transmitted through the transmit antenna circuit 140 may be reflected from the target, and the receive antenna circuit 150 may receive a reflected signal reflected from the target. In an embodiment, the receive antenna circuit 150 may include a plurality of receive antennas (*e.g.*, 4 Rx).

The LNA 160 is designed to minimize noise in order to amplify a weak RF signal, and may perform amplification to minimize noise and maximize signal.

The MIXER 170 may perform frequency down-conversion of a received radar signal by mixing a transmit signal with a reflected signal.

The LPF 180 may filter out a high frequency band while allowing a low frequency band to pass therethrough. The A/D 190 may convert an analog radar signal into a digital one. Therefore, the MMIC 100 may extract a beat frequency including information on the range and the velocity of the received radar signal.

In an embodiment, the reflected signal reflected from the target may be mixed with the transmit signal to generate a low frequency beat signal (e.g., baseband signal), and its frequency may provide the range of the target. This operation may be repeatedly performed on P number of consecutive FMCW chirps.

In an embodiment, a range R to a target may be determined based on a round-trip time between transmitting a radar signal to the target and receiving the radar signal from the target (where R=cτ/2, τ is the round-trip time in seconds and c is the velocity of light in meters per second). Thus, the estimation of t enables the range measurement.

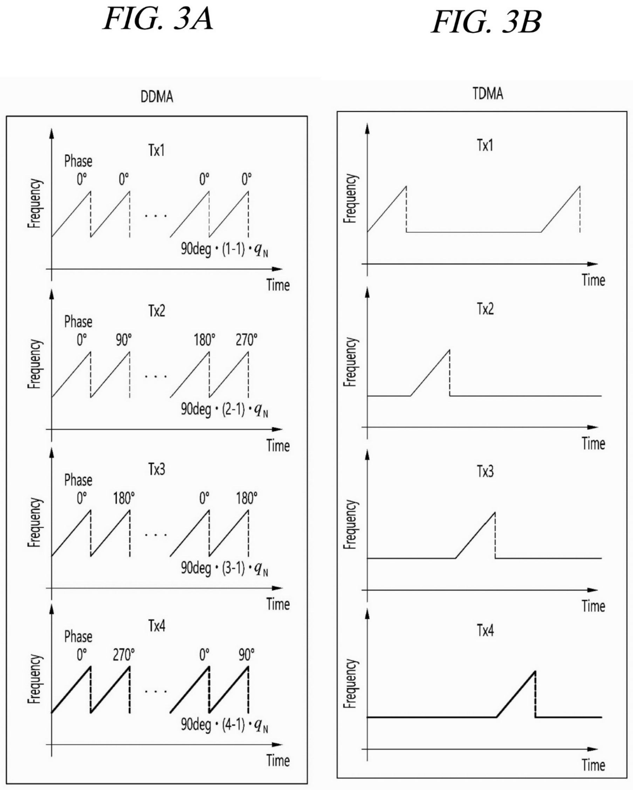

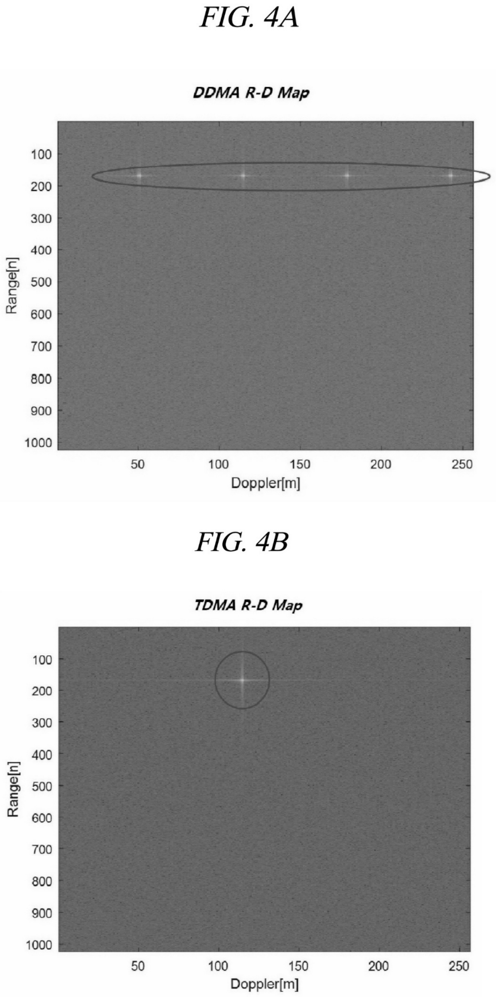

**FIG. 2** is a time-frequency graph of a radar signal according to the embodiment of the present disclosure. **FIG. 3A** shows graphs of Doppler division multiple access (DDMA) transmit signals according to the embodiment of the present disclosure. **FIG. 3B** shows graphs of time division multiple access (TDMA) transmit signals according to a comparative example of the present disclosure. **FIG. 4A** is a range-Doppler map (R-D Map) of DDMA reflected signals according to the embodiment of the present disclosure. **FIG. 4B** is an R-D Map of TDMA reflected signals according to the comparative example of the present disclosure.

Referring to **FIG. 2, FIG. 3A, FIG. 3B, FIG. 4A,** and **FIG. 4B,** the radar device 10 (e.g., the MMIC 100) according to an embodiment may transmit a transmit signal Tx through a plurality of transmit antennas Tx1, Tx2, Tx3 and Tx4 and receive a reflected signal Rx reflected from the target through a plurality of receive antennas.

In an embodiment, the radar device 10 may be of FMCW type configured to transmit a continuous signal CW whose frequency is modulated with time. The frequency-modulated continuous signal CW may include periodic and short power pulses and silent periods. The silent periods allow the radar device 10 to receive the reflected signals, and serve as timing marks for the radar device 10 to perform range estimation. With a pulsed radar configuration that uses the frequency-modulated continuous signal (CW) pulses, simultaneous range-velocity estimation in multitarget traffic scenarios can be provided. The radar device 10 may transmit periodic FM chirps (or pulses or ramps) whose frequency may increase linearly during the pulse.

The radar device 10 according to an embodiment may control the plurality of transmit antennas Tx1, Tx2, Tx3 and Tx4 to set phases of the FMCW radar chirps of a sequence in accordance with a predefined Doppler division multiple access (DDMA).

The radar device 10 according to an embodiment may transmit radar signals through the plurality of transmit antennas Tx1, Tx2, Tx3 and Tx4 in accordance with the DDMA. In an embodiment, the radar device 10 may radiate radar signals through the plurality of transmit antennas Tx1, Tx2, Tx3 and Tx4 at the same time, and the radar signals may include a plurality of chirps to which a phase shift with a predetermined magnitude is consecutively applied. According to the DDMA, the radar signal has a different phase for each chirp, and, thus, a frequency shift may occur in a Doppler frequency direction.

If a radar signal is transmitted according to the DDMA, a transmit antenna corresponding to a received reflected signal needs to be distinguished properly in order to estimate the velocity of a target without ambiguities. Therefore, it is possible to accurately estimate the angle of the target.

Conventionally, a phase shift with a non-uniform phase step was applied to estimate a first transmit antenna or an empty band was used to estimate a transmit antenna in order to differentiate among transmit antennas. However, according to the non-uniform phase step, when a signal-to-noise ratio (SNR) is low, a target cannot be detected properly and the computation amount is large, and, thus, an additional computation core may be required. Also, when the empty band is used, the performance of the radar is degraded compared to the magnitude of the radar signal, and the SNR may be decreased.

In an embodiment, the plurality of transmit antennas Tx1, Tx2, Tx3 and Tx4 may radiate radar signals with different phase shifts from each other at the same time. A phase shift with a predetermined magnitude may be set differently for each of the plurality of transmit antennas Tx1, Tx2, Tx3 and Tx4 and may have a uniform magnitude.

In an embodiment, phase shifts previously determined for the respective transmit antennas Tx1, Tx2, Tx3 and Tx4 may uniformly differ by. $\theta_{Step}$, which may be referred to as "uniform phase step." For example, a phase shift with a uniform magnitude may be set for the transmit antenna Tx1 as 0 Deg Step, the transmit antenna Tx2 as 90 Deg Step, the transmit antenna Tx3 as 180 Deg Step, and the transmit antenna Tx4 as 270 Deg Step.

The phase shifts in the plurality of transmit antennas Tx1, Tx2, Tx3 and Tx4 according to the uniform phase step can be represented by the following equation.

[Equation 1]

$$Phase\ Shift\ \theta_{m,q} = \theta_{Step} \cdot (m-1) \cdot q$$

Herein, m denotes a transmit antenna index, and q denotes a chirp index. For example, a phase step $\theta_{Step}$ may be a phase magnitude obtained by dividing 360 Deg by the number of transmit antennas.

In an embodiment, a DDMA reflected signal of the radar device 10 can be represented by the following equation. The following reflected signal may be beat frequency data sampled by an ADC.

[Equation 2]

$$Y_{m,n}(t,q) = \sum_{k=0}^{K-1} e^{i\phi_{m,q}} \cdot e^{-i2\pi\frac{(md_t+nd_r)}{\lambda}\sin(\theta^{(k)})} \cdot e^{-i2\pi\left(f_{bu}^{(k)}-f_d^{(k)}\right)\frac{t}{f_s}} \cdot e^{-i2\pi f_d^{(k)}T_c q}$$

In the above equation, a first component $e^{i\phi_{m,q}}$ represents a phase shift of the signal, a second component

$$e^{-i2\pi\frac{(md_t+nd_r)}{\lambda}\sin(\theta^{(k)})}$$

represents an angle of the signal, a third component

$$e^{-i2\pi\left(f_{bu}^{(k)}-f_d^{(k)}\right)\frac{t}{f_s}}$$ represents a range of the signal, and a fourth component $e^{-i2\pi f_d(k)T_c q}$ represents Doppler of the signal.

In contrast, the radar device 10 may radiate radar signals through the plurality of transmit antennas Tx1, Tx2, Tx3 and Tx4 at different time points in accordance with the time division multiple access (TDMA). Accordingly, the radiation times of radar signals from the plurality of transmit antennas Tx1, Tx2, Tx3 and Tx4, respectively, may not overlap with one another.

A TDMA reflected signal of the radar device 10 can be represented by the following equation. For example, the following reflected signal may be beat frequency data sampled by the ADC.

[Equation 3]

$$Y_{m,n}(t,q) = \sum_{k=0}^{K-1} rect(\frac{t-qT_c}{T}) \cdot e^{-i2\pi\frac{(md_t+nd_r)}{\lambda}\sin(\theta^{(k)})} \cdot e^{-i2\pi\left(f_{bu}^{(k)}-f_d^{(k)}\right)\frac{t}{f_s}} \cdot e^{-i2\pi f_d^{(k)}T_c q}$$

In the above equation, a first component $rect(\dfrac{t-qT_c}{T})$ represents a unit rectangular function of the signal, a second component $e^{-i2\pi\frac{(md_t+nd_r)}{\lambda}\sin(\theta^{(k)})}$ represents an angle of the signal, a third component

$$e^{-i2\pi\left(f_{bu}^{(k)}-f_d^{(k)}\right)\frac{t}{f_s}}$$ represents a range of the signal, and a fourth component $e^{-i2\pi f_d^{(k)}T_c q}$

represents Doppler of the signal.

A beat frequency $f_b$ may be a difference between an up-beat frequency $f_{bu} = \mu\dfrac{2R}{c}$ and a Doppler

frequency $f_d = \dfrac{2v}{\lambda}$ .

Herein, t denotes time (sample Index), $T_c$ denotes a pulse repetition interval (PRI), $d_t$ denotes a distance between transmit antennas, $d_r$ denotes a distance between receive antennas, $e^{i\phi m.q}$ denotes a phase shift, $f_s$ denotes a sampling frequency, v denotes the velocity of a target, K denotes the number of targets, B denotes a bandwidth, T denotes a sweep time, $\mu$ denotes B/T, R denotes a range from the radar device 10 to the target, c denotes the velocity of light in meters per second, $\lambda$ denotes a wavelength of the radar signal, m denotes a transmit antenna index, n denotes a receive antenna index, and q denotes a chirp index.

The radar device 10 according to an embodiment may convert a received reflected signal into a frequency component in a range-Doppler domain by applying a Fast Fourier Transform (FFT) to the received reflected signal.

In an embodiment, the radar device 10 may perform 2D FFT of reflected signals in a range axis (t axis) and a Doppler axis (q axis). The radar device 10 may obtain a frequency $f_{bu}(k) - f_d(k)$ through range FFT, and this frequency is equal to a beat frequency. The radar device 10 may obtain a frequency $f_d(k)$ through Doppler FFT, and this frequency is equal to a Doppler frequency. Therefore, the radar device 10 may obtain the distance and the velocity of the target from 2D FFT data of reflected signals.

The radar device 10 according to an embodiment may obtain an R-D Map based on the 2D FFT data of reflected signals of each receive antenna.

In an embodiment, the radar device 10 may obtain the R-D Map by performing non-coherent integration (NCI) of the 2D FFT data of the reflected signals received from each of the plurality of receive antennas. In an embodiment, the radar device 10 may obtain the R-D Map by performing magnitude summation of the 2D FFT data.

For example, 2D FFT data of DDMA reflected signals of the radar device 10 may be integrated according to the following equation.

[Equation 4]

$$RD\,Map(q,s) = \sum_{n=1}^{Rx} |2D\,FFT(n,q,s)|$$

For example, 2D FFT data of TDMA reflected signals of the radar device 10 may be integrated according to the following equation.

[Equation 5]

$$RD\,Map(q,s) = \sum_{m=1}^{Tx}\sum_{n=1}^{Rx} |2D\,FFT(m,n,q,s)|$$

Herein, Tx denotes the number of transmit antennas, Rx denotes the number of receive antennas, q denotes a chirp index, and s denotes a range (sample) index.

For example, data of TDMA reflected signals are received in time slots, and, thus, the positions of physical antennas corresponding to the reflected signals may be matched in the order of reception.

According to the R-D Map of the DDMA reflected signals shown in **FIG. 4A** in comparison with the R-D Map of the TDMA reflected signals shown in **FIG. 4B,** transmit signals having different phases from each other are transmitted at the same time, and, thus, a reflected signal received from one receive antenna includes transmit signals of all of transmit antennas and the transmit antennas cannot be differentiated in a time axis direction. Therefore, the number of peaks for the same target shown in the R-D Map of the DDMA reflected signals can be equal to the number of transmit antennas, and, thus, data may need to be differentiated so as to correspond to the transmit antennas in a Doppler axis direction.

When the position of a physical antenna cannot be found accurately, a mismatch of antenna positions occurs. Therefore, the angle of the target cannot be estimated properly.

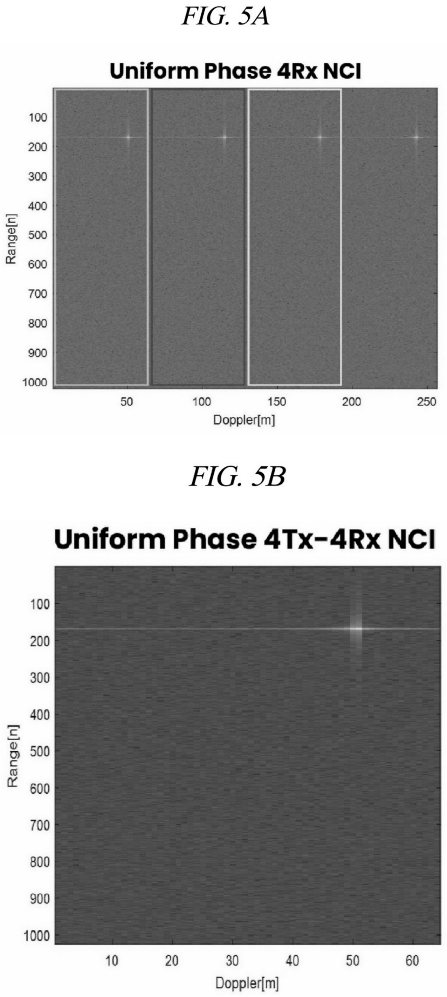

**FIG. 5A** is an R-D Map of reflected signals corresponding to transmit signals with a uniform phase step according to the embodiment of the present disclosure, and **FIG. 5B** is a portion of **FIG. 5A.**

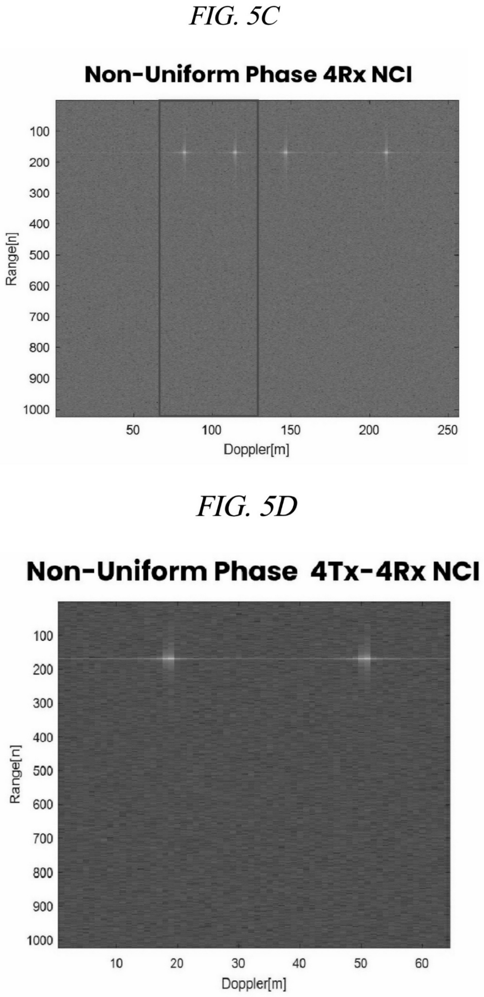

**FIG. 5C** is an R-D Map of reflected signals corresponding to transmit signals with a non-uniform phase step according to the comparative example of the present disclosure, and **FIG. 5D** is a portion of **FIG. 5C.**

Referring to **FIG. 5A** and **FIG. 5B,** the radar device 10 according to an embodiment may radiate a transmit signal according to the uniform phase step in which a phase step between phase shifts with a predetermined magnitude is applied to each of a plurality of transmit antennas with the same magnitude. Therefore, when NCI is performed on 2D FFT data of reflected signals received by the plurality of receive antennas, respectively, peaks for the same target may occur at the same interval in the Doppler axis direction within the R-D Map.

In an embodiment, the radar device 10 divides the Doppler axis into quarters and performs integration. Thus, the radar device 10 can perform NCI with a peak for each transmit antenna. Therefore, even when a peak drop caused by a gain difference occurs in any one of a plurality of transmit antennas, a target can be detected. Also, an SNR for peaks can be improved by integrating each transmit antenna. For example, it is possible to improve the SNR by up to 4-fold (when the number of transmit antennas is four) according to the uniform phase step compared to the non-uniform phase step.

Also, final data of reflected signals may be 4Tx-4Rx NCI data corresponding to each of transmit and receive antennas as shown in **FIG. 5B.**

However, referring to **FIG. 5C** and **FIG. 5D,** according to the non-uniform phase step in which a phase step between phase shifts with a predetermined magnitude is applied to each of a plurality of transmit antennas with different magnitudes, 2D FFT data of reflected signals received by the plurality of receive antennas, respectively, are shown as peaks for the same target at different intervals in the Doppler axis direction within the R-D Map.

That is, according to the non-uniform phase step, the transmit antennas can be divided in the Doppler axis direction by using a predetermined phase offset, but when the Doppler axis is divided into quarters in the R-D Map, two targets appear as shown in **FIG. 5D.** Therefore, a peak of 4Rx NCI data corresponding to each of receive antennas can be obtained, and when a peak drop caused by a gain difference occurs in any one of the plurality of transmit antennas, a target cannot be detected. That is, according to the non-uniform phase step, a peak detection failure rate may be increased, and, thus, a target detection probability may be decreased.

According to the non-uniform phase step, the computation amount for division of the transmit antennas is very large and an additional computation core may be required. However, according to the uniform phase step compared to the non-uniform phase step, NCI data may be reduced in size to ¼ with a 4-fold memory advantage.

The radar device 10 according to an embodiment may obtain an R-D Map by integrating the 2D FFT data of reflected signals in each of the transmit antennas and the receive antennas. In an embodiment, the radar device 10 may extract a group of candidates for the target by using a constant false alarm rate (CFAR) detection algorithm. For example, the CFAR detection algorithm may be a target detection algorithm generally used in the radar device 10. It can be used to detect the position of a peak in the R-D Map. For example, CA-CFAR, OS-CFAR, or the like may be used.

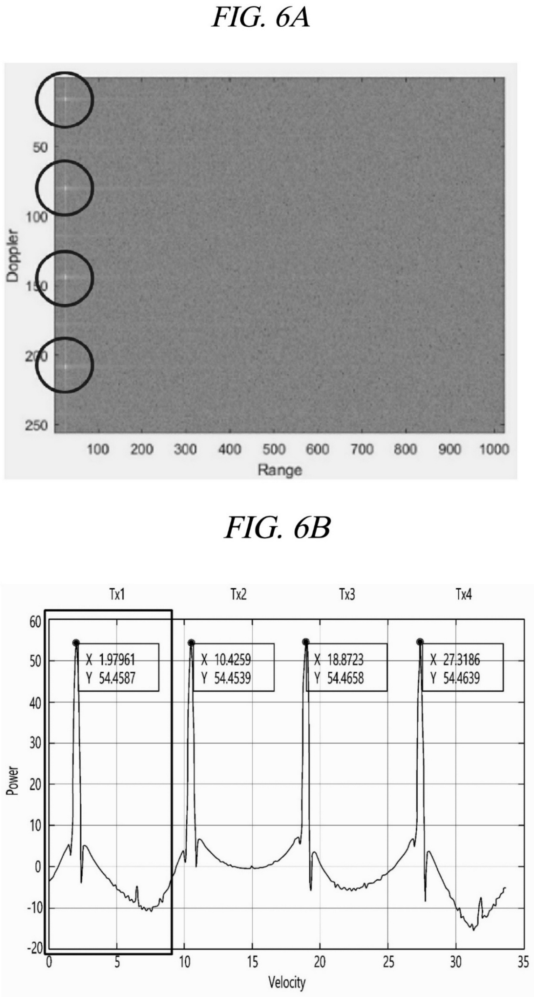

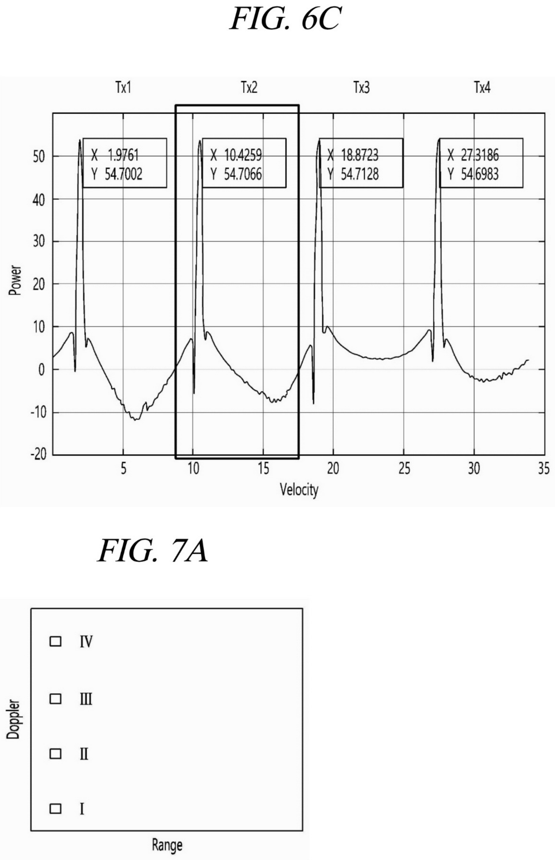

**FIG. 6A** is an R-D Map in which 2D FFT data of reflected signals are integrated according to an embodiment of the present disclosure. **FIG. 6B** and **FIG. 6C** are examples of the R-D Map of **FIG. 6A** after one-dimensional floating.

Referring to **FIG. 6A, FIG. 6B,** and **FIG. 6C,** the radar device 10 according to an embodiment may radiate transmit signals through a plurality of transmit antennas according to the uniform phase step, and when reflected signals, which are at least a part of the radiated transmit signals, are subjected to 2D FFT and NCI, peaks corresponding to the respective transmit antennas can be obtained from the R-D Map.

In an embodiment, when the radar device 10 performs 1D plotting in the Doppler axis direction at a point where a peak occurs, Doppler ambiguity may occur as shown in **FIG. 6B** and **FIG. 6C.** The Doppler ambiguity refers to a phenomenon in which peaks occur at the same velocity interval.

As illustrated in **FIG. 6B,** the velocity of an actual target is 2 [m/s], but peaks with the same magnitude may occur at 10.4 [m/s], 18.87 [m/s], and 27.31 [m/s], respectively. A peak corresponding to a transmit antenna Tx1 applied with a phase shift of 0 Deg is a Doppler component (True Doppler) for the actual target. A peak corresponding to a transmit antenna Tx2 applied with a phase shift of 90 Deg occurs at 10.4 [m/s], a peak corresponding to a transmit antenna Tx3 applied with a phase shift of 180 Deg occurs at 18.87 [m/s], and a peak corresponding to a transmit antenna Tx4 applied with a phase shift of 270 Deg occurs at 27.31 [m/s]. A frequency shift occurs according to different phases for respective chirps.

However, as illustrated in **FIG. 6C,** the velocity of an actual target is 10.4 [m/s], but peaks with the same magnitude may occur at 2 [m/s], 18.87 [m/s], and 27.31 [m/s], respectively, as in **FIG. 6B.** That is, according to the DDMA, the position of a physical antenna is continuously changed in data corresponding to reflected signals depending on the velocity of the target, and, thus, an additional processing for matching data of a received reflected signal with the position of the physical antenna may be further required to identify the velocity of the target.

That is, due to the Doppler ambiguity, peaks corresponding to the respective transmit antennas occur in the R-D Map of reflected signals, and, thus, there may be ambiguity about the positions of the transmit antennas. Therefore, the radar device 10 according to the present disclosure may resolve the Doppler ambiguity by estimating a transmit antenna corresponding to a reflected signal.

Peak data Peakdata[n][Tx_ch*Rx_ch] of reflected signals according to an embodiment may be a result of 2D FFT complex corresponding to a peak, and may include n number of peak data depending on the number of peaks.

[Equation 6]

$$\text{Peakdata[n][Tx\_ch*Rx\_ch]} = \text{2DFFTData[n][Tx\_ch*Rx\_ch]\_real} \quad 1j * \text{2DFFTData[n][Tx\_Ch*Rx\_ch]\_Imag}$$

Herein, for example, Tx_ch may be 1 to 4, and Rx_ch may be 1 to 4.

According to an embodiment, nth peak data may include data about the numbers of transmit antenna and receive antennas (Tx_ch*Rx_ch=m). For example, when there are four transmit antennas and four receive antennas, the nth peak data may include sixteen pieces of data as follow.

The radar device 10 according to an embodiment may estimate a plurality of transmit antennas matched with a plurality of peaks, respectively, by estimating a Doppler component of the actual target.

[Equation 7]

$$f_{n,m} = [f_{n,1}\ f_{n,2}\ f_{n,3}\ f_{n,4} \quad f_{n,5}\ f_{n,6}\ f_{n,7}\ f_{n,8} \quad f_{n,9}\ f_{n,10}\ f_{n,11}\ f_{n,12} \quad f_{n,13}\ f_{n,14}\ f_{n,15}\ f_{n,16}]$$

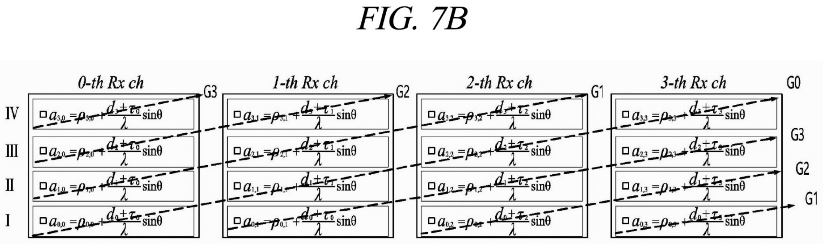

**FIG. 7A** is a R-D map for a single target according to an embodiment of the present disclosure. **FIG. 7B** illustrates a sequential phase sum obtained by summing phase components of each of a plurality of receive antennas for a single target according to the embodiment of the present disclosure.

Referring to **FIG. 7A** and **FIG. 7B,** the radar device 10 according to an embodiment may transmit radar signals through a plurality of transmit antennas in a DDMA scheme and may receive, through a plurality of receive antennas, reflected signals, which are at least a part of the radar signals reflected from a target.

The radar device 10 according to an embodiment may convert the received reflected signals into frequency components in a R-D domain by applying an FFT to the received reflected signals.

**FIG. 7A** illustrates an example of an R-D domain map when the radar device 10 according to an embodiment transmits radar signals through four transmit antennas in the DDMA scheme. As shown in **FIG. 7A,** even when there is only one target, four peaks (I, II, III, IV) may occur in the R-D map.

The radar device 10 according to an embodiment needs to identify the actual Doppler component of the target among the Doppler components corresponding to the four peaks (I, II, III, IV) in order to perform matching of the transmit antennas based on the identified peak. In this case, it is possible to accurately calculate a steering vector. Since inaccurate calculation of the steering vector can significantly degrade target angle estimation performance, accurate matching of the transmit antennas is important.

When the radar device 10 according to an embodiment transmits radar signals in the DDMA scheme, matching of the transmit antennas with the received data may be ambiguous depending on the target's velocity (Tx channel matching ambiguity). Therefore, additional processing for transmit antenna matching may be required. The present disclosure proposes a method for accurately matching transmit antennas with reflected signals and determining the correct velocity and angle of a target by utilizing software-based signal processing built upon hardware design.

The radar device 10 according to an embodiment may match the received reflected signals with the plurality of transmit antennas based on phase offsets corresponding to connection paths between the MMIC and the plurality of transmit and receive antennas (0-th, 1-st, 2-nd, 3-rd Rx antenna elements).

The radar device 10 according to an embodiment may match frequency data of the reflected signals, which have been converted into the R-D domain, with the physical arrangement of the plurality of transmit and receive antennas (0-th, 1-st, 2-nd, 3-rd Rx antenna elements) based on the phases of the reflected signals.

**As** shown in **FIG. 7B,** the plurality of receive antennas (0-th, 1-st, 2-nd, 3-rd Rx antenna elements) according to an embodiment may have phase characteristics corresponding to the four peaks (I, II, III, IV) of the reflected signals received by the respective antennas.

For example, when the radar device 10 includes four receive antennas (0-th, 1-st, 2-nd, 3-rd Rx antenna elements), the phase characteristics of the reflected signals received by the respective receive antennas (0-th, 1-st, 2-nd, 3-rd Rx antenna elements) may be expressed as follows.

First receive antenna (0-th Rx antenna element) : $\alpha_{0,0} = \rho_{0,0} + \dfrac{d_0 + \tau_0}{\lambda} \sin\theta$ ,

$\alpha_{1,0} = \rho_{1,0} + \dfrac{d_1 + \tau_0}{\lambda} \sin\theta$ $\alpha_{2,0} = \rho_{2,0} + \dfrac{d_2 + \tau_0}{\lambda} \sin\theta$ , $\alpha_{3,0} = \rho_{3,0} + \dfrac{d_3 + \tau_0}{\lambda} \sin\theta$

Second receive antenna (1-st Rx antenna element) : $\alpha_{0,1} = \rho_{0,1} + \dfrac{d_0 + \tau_1}{\lambda} \sin\theta$ ,

$\alpha_{1,1} = \rho_{1,1} + \dfrac{d_1 + \tau_1}{\lambda} \sin\theta$ $\alpha_{2,1} = \rho_{2,1} + \dfrac{d_2 + \tau_1}{\lambda} \sin\theta$ , $\alpha_{3,1} = \rho_{3,1} + \dfrac{d_3 + \tau_1}{\lambda} \sin\theta$ ,

Third receive antenna (2-nd Rx antenna element) : $\alpha_{0,2} = \rho_{0,2} + \dfrac{d_0 + \tau_2}{\lambda} \sin\theta$ ,

$\alpha_{1,2} = \rho_{1,2} + \dfrac{d_1 + \tau_2}{\lambda} \sin\theta$ $\alpha_{2,2} = \rho_{2,2} + \dfrac{d_2 + \tau_2}{\lambda} \sin\theta$ , $\alpha_{3,2} = \rho_{3,2} + \dfrac{d_3 + \tau_2}{\lambda} \sin\theta$ ,

Fourth receive antenna (3-rd Rx antenna element) : $\alpha_{0,3} = \rho_{0,3} + \dfrac{d_0 + \tau_3}{\lambda} \sin\theta$ ,

$\alpha_{1,3} = \rho_{1,3} + \dfrac{d_1 + \tau_3}{\lambda} \sin\theta$ $\alpha_{2,3} = \rho_{2,3} + \dfrac{d_2 + \tau_3}{\lambda} \sin\theta$ , $\alpha_{3,3} = \rho_{3,3} + \dfrac{d_3 + \tau_3}{\lambda} \sin\theta$ ,

Herein, $\alpha_{m,n}$ denotes a phase component of a reflected signal transmitted from an m-th transmit antenna and received by an n-th receive antenna, $\rho_{m,n}$ denotes a phase offset between the m-th transmit antenna and the n-th receive antenna, $\lambda$ denotes a wavelength of a radar signal, $d_m$ denotes the distance between the first transmit antenna (0-th Tx antenna element) and the m-th transmit antenna, $\tau_n$ denotes the distance between the first receive antenna (0-th Rx antenna element) and the n-th receive antenna, and $\theta$ is the azimuth of the target.

In the plurality of receive antennas (0-th, 1-st, 2-nd, and 3-rd Rx antenna elements) according to an embodiment, the phase components of the reflected signals received by the respective antennas may include a phase offset $\rho_{m,n}$, which

is an inherent hardware characteristic of the radar device 10, and a delay component $\dfrac{d_m + \tau_n}{\lambda} \sin\theta$ caused by the

physical distance between the transmit or receive antennas (0-th, 1-st, 2-nd, and 3-rd Rx antenna elements).

**The** radar device 10 according to an embodiment may calculate a sequential phase sum by summing phase components at different positions across the plurality of receive antennas (0-th, 1-st, 2-nd, and 3-rd Rx antenna elements) to eliminate an influence of phase delay caused by the physical distance between the plurality of transmit and receive antennas (0-th, 1-st, 2-nd, and 3-rd Rx antenna elements).

**The** peak phases (I, II, III, IV) of reception channels corresponding to the respective receive antennas (0-th, 1-st, 2-nd, and 3-rd Rx antenna elements) include both a phase offset, which is an inherent hardware characteristic of the radar device 10, and a phase shift caused by the azimuth of the target. Since the phase offset is a predetermined (deterministic) value, it may be estimated and stored in a database. In other words, by removing an unknown variable associated with the phase offset, matching of the transmit antennas can be performed. To this end, the peak phases of the different reception channels may be summed, and, thus, the phase shift caused by the azimuth of the target may be made constant, thereby leaving only the phase offset component.

For example, sequential phase sums $\hat{\alpha}_0$, $\hat{\alpha}_1$, $\hat{\alpha}_2$, $\hat{\alpha}_3$, obtained by summing phase components at different positions across the plurality of receive antennas (0-th, 1-st, 2-nd, and 3-rd Rx antenna elements), may be calculated as follows.

[Equation 8]

$$\hat{\alpha}_0 = \alpha_{0,0} + \alpha_{1,1} + \alpha_{2,2} + \alpha_{3,3}$$
$$= \left(\rho_{0,0} + \rho_{1,1} + \rho_{2,2} + \rho_{3,3}\right) + \left\{\frac{(d_0 + d_1 + d_2 + d_3) + (\tau_0 + \tau_1 + \tau_2 + \tau_3)}{\lambda}\right\}\sin\theta$$

$$\hat{\alpha}_1 = \alpha_{1,0} + \alpha_{2,1} + \alpha_{3,2} + \alpha_{0,3}$$
$$= \left(\rho_{1,0} + \rho_{2,1} + \rho_{3,2} + \rho_{0,3}\right) + \left\{\frac{(d_1 + d_2 + d_3 + d_0) + (\tau_0 + \tau_1 + \tau_2 + \tau_3)}{\lambda}\right\}\sin\theta$$

$$\hat{\alpha}_2 = \alpha_{2,0} + \alpha_{3,1} + \alpha_{0,2} + \alpha_{1,3}$$
$$= \left(\rho_{2,0} + \rho_{3,1} + \rho_{0,2} + \rho_{1,3}\right) + \left\{\frac{(d_2 + d_3 + d_0 + d_1) + (\tau_0 + \tau_1 + \tau_2 + \tau_3)}{\lambda}\right\}\sin\theta$$

$$\hat{\alpha}_3 = \alpha_{3,0} + \alpha_{0,1} + \alpha_{1,2} + \alpha_{2,3}$$
$$= \left(\rho_{3,0} + \rho_{0,1} + \rho_{1,2} + \rho_{2,3}\right) + \left\{\frac{(d_3 + d_0 + d_1 + d_2) + (\tau_0 + \tau_1 + \tau_2 + \tau_3)}{\lambda}\right\}\sin\theta$$

In an embodiment, the sequential phase sums $\hat{\alpha}_0$, $\hat{\alpha}_1$, $\hat{\alpha}_2$, $\hat{\alpha}_3$, obtained by summing phase components at different positions across the plurality of receive antennas (0-th, 1-st, 2-nd, and 3-rd Rx antenna elements), may commonly include a phase shift $\left\{\frac{(d_0+d_1+d_2+d_3)+(\tau_0+\tau_1+\tau_2+\tau_3)}{\lambda}\right\}\sin\theta$ caused by the azimuth of the target.

Accordingly, the sequential phase sums $\hat{\alpha}_0$, $\hat{\alpha}_1$, $\hat{\alpha}_2$, $\hat{\alpha}_3$ may be determined by a phase offset $\rho$, which is an inherent hardware characteristic of the radar device 10.

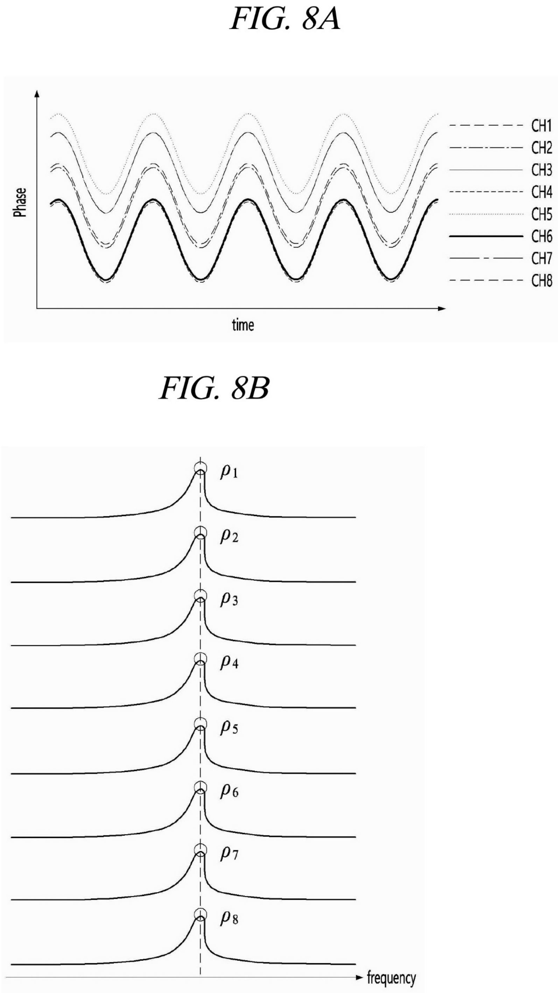

IG. 8A is a graph showing phases of signals received over time through different channels CH1, CH2, CH3, CH4, CH5, CH6, CH7 and CH8 of the radar device 10 according to an embodiment of the present disclosure. **FIG. 8B** shows FFT results of signals received through the different channels CH1, CH2, CH3, CH4, CH5, CH6, CH7 and CH8 of the radar device 10 according to an embodiment of the present disclosure.

Referring to **FIG. 8A** and **FIG. 8B**, in the radar device 10, channel imbalances inevitably occur due to path differences among the channels CH1, CH2, CH3, CH4, CH5, CH6, CH7 and CH8. For the same antenna signal, the channels CH1, CH2, CH3, CH4, CH5, CH6, CH7 and CH8 have different phase values $\rho_1$, $\rho_2$, $\rho_3$, $\rho_4$, $\rho_5$, $\rho_6$, $\rho_7$, $\rho_8$, *i.e.,* phase offsets.

As shown in **FIG. 8A,** signals received through the eight different channels CH1, CH2, CH3, CH4, CH5, CH6, CH7 and CH8 for the antenna signals of the same frequency component are identical, but phase offsets occur in the different channels CH1, CH2, CH3, CH4, CH5, CH6, CH7 and CH8.

Such phase offsets are inherent hardware characteristics of the radar device 10 and may be obtained using an RTS (radar target simulator) in an anechoic chamber. Further, when the radar device 10 is in operation, the phase offsets may be estimated through a self-calibration function.

As shown in **FIG. 8B,** when an FFT is performed on the antenna signals of the same frequency component received through the channels CH1, CH2, CH3, CH4, CH5, CH6, CH7 and CH8, peaks appear at the same position. The phase of each peak includes phase offset information for each of the channel CH1, CH2, CH3, CH4, CH5, CH6, CH7 and CH8. Thus, it is possible to acquire phase offsets which are inherent hardware characteristics.

The above process can be expressed by the following equation.

[Equation 9]

$$c_n(t) = e^{j2\pi(f_b t + \rho_n)} \xrightarrow{FFT} c_n(f) = e^{j2\pi\rho_n} \cdot sinc(f - f_b)$$

Herein, $c_n(t)$ denotes time data of an n-th channel, $f_b$ denotes an oscillating frequency, $\rho_n$ denotes a phase offset of the n-th channel, and $c_n(f)$ denotes a frequency component of the n-th channel.

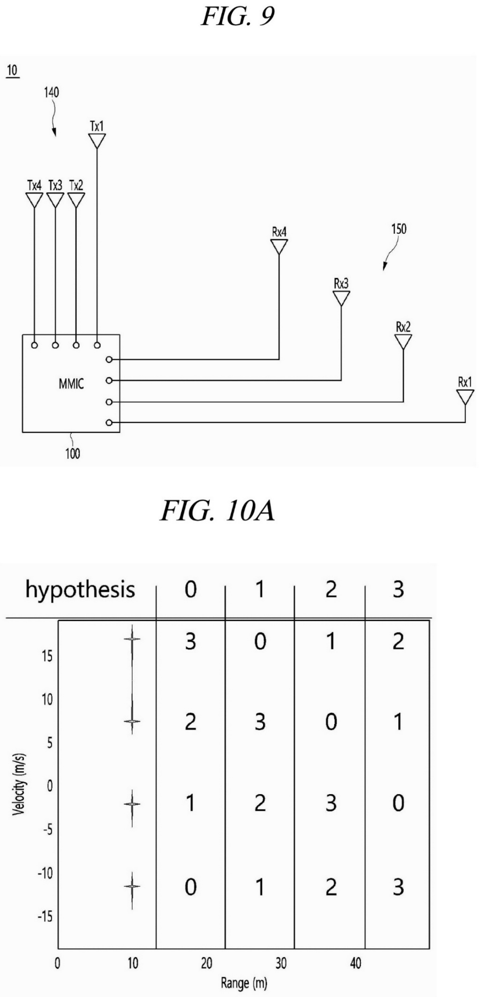

**FIG. 9** is a configuration diagram illustrating the MMIC 100 connected to the plurality of transmit antennas Tx1, Tx2, Tx3 and Tx4 and a plurality of receive antennas Rx1, Rx2, Rx3 and Rx4 according to an embodiment of the present disclosure.

Referring also to **FIG. 9,** a phase offset corresponding to a connection path in the radar device 10 according to an embodiment may be determined based on the lengths of a transmission path between the plurality of transmit antennas Tx1, Tx2, Tx3 and Tx4 and the MMIC 100 and a reception path between the MMIC 100 and the plurality of receive antennas Rx1, Rx2, Rx3 and Rx4.

In an embodiment, the transmission path between the plurality of transmit antennas Tx1, Tx2, Tx3 and Tx4 each connected to the MMIC 100 is formed to have a unique length, and the phase offset may be determined according to the length of the transmission path of the radar signal.

In an embodiment, the reception path between the plurality of receive antennas Rx1, Rx2, Rx3 and Rx4 each connected to the MMIC 100 is formed to have a unique length, and the phase offset may be determined according to the length of the reception path of the radar signal.

The plurality of transmit antennas Tx1, Tx2, Tx3 and Tx4 of the radar device 10 according to an embodiment may be designed such that the phase offsets differ depending on the connection path.

In an embodiment, when an analog circuit of the radar device 10 is designed, the length of the transmission path of one antenna (e.g., Tx1) may be intentionally designed to differ from the lengths of the transmission paths of the other antennas (e.g., Tx2, Tx3 and Tx4). Accordingly, the phase offset of a radar signal transmitted from the corresponding antenna (e.g., Tx1) may have a significantly different value from the phase offsets of radar signals transmitted from the other antennas (e.g., Tx2, Tx3 and Tx4).

However, when the difference in transmission path length becomes an integer multiple of the wavelength of the radar signal, no phase offset may occur. Therefore, when the difference in transmission path length between one antenna (*e.g.,* Tx1) and the other antennas (*e.g.,* Tx2, Tx3 and Tx4) is not an integer multiple of the wavelength of the radar signal, a meaningful phase offset can be used to estimate a transmit antenna.

Although the antenna having a transmission path of a different length has been described as Tx1, the transmission path lengths of the other antennas (*e.g.,* Tx2, Tx3 and Tx4) may also be set differently. Accordingly, each of the antennas may have a meaningful phase offset. Further, the transmission path lengths of the plurality of transmit antennas (*e.g.,* Tx1, Tx2, Tx3 and Tx4) may be set differently from one another. Accordingly, the antennas with different channels respectively have meaningful phase offsets. For example, there may be a plurality of transmit antennas whose transmission path lengths are set to different values.

A phase offset corresponding to a connection path in an embodiment may be estimated based on a test signal transmitted through the plurality of transmit antennas Tx1, Tx2, Tx3 and Tx4 or received through the plurality of receive antennas Rx1, Rx2, Rx3 and Rx4, and may be stored in a database in advance.

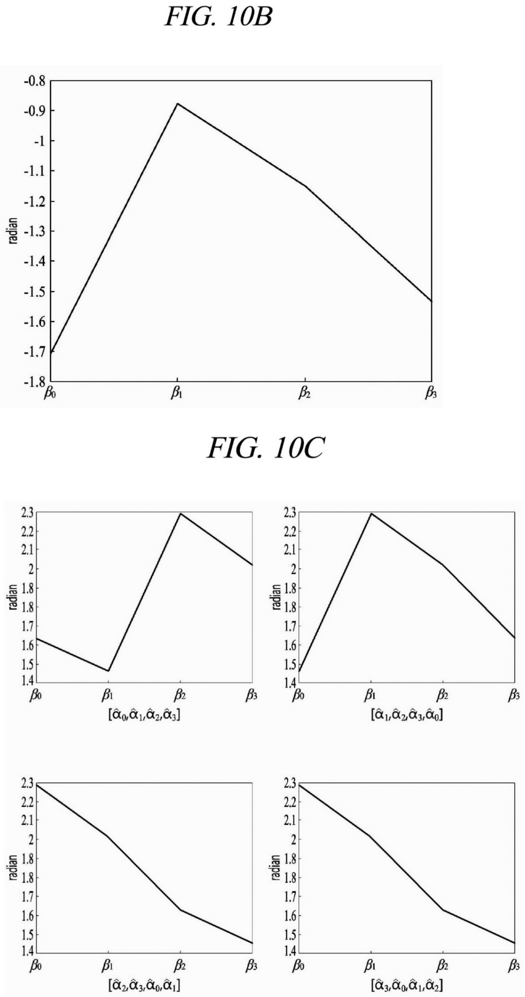

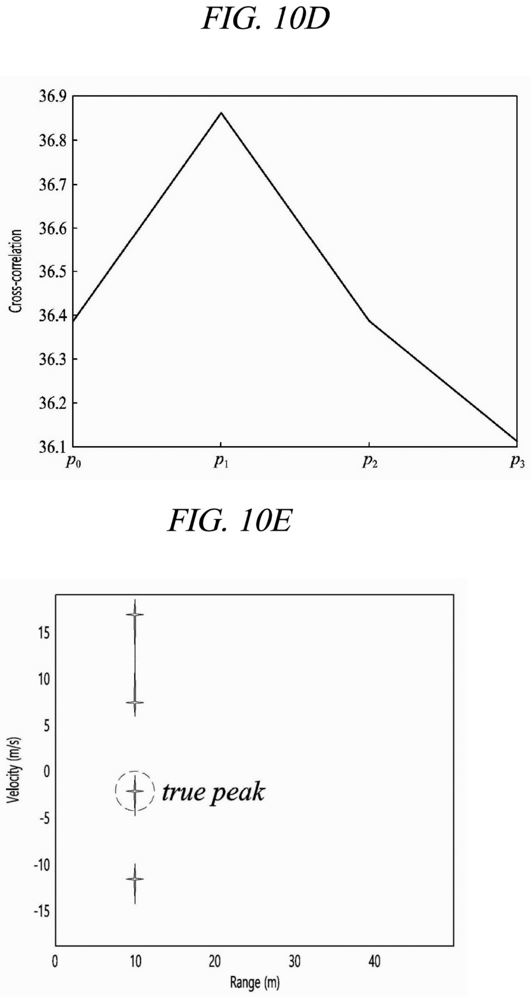

**FIG. 10A** is an R-V map for a single target based on the number of a plurality of transmit antennas according to an embodiment of the present disclosure. **FIG. 10B** is a graph showing a sum of phase offsets across the plurality of receive antennas Rx1, Rx2, Rx3 and Rx4 of the radar device 10 according to an embodiment of the present disclosure. **FIG. 10C** shows graphs showing a sequence of sequential phase sums based on the number of the plurality of transmit antennas according to the embodiment of the present disclosure. **FIG. 10D** is a graph showing a cost function based on a sequential phase sum and the number of the plurality of transmit antennas according to the embodiment of the present disclosure. **FIG. 10E** is an R-V map in which a peak corresponding to a first transmit antenna is matched according to the embodiment of the present disclosure.

Referring to **FIG. 10A to FIG. 10E,** in the R-V map for a single target, peaks may appear corresponding in number to the transmit antennas (*e.g.,* four). Herein, the R-V map may be easily derived by converting the Doppler frequency in the R-D map into velocity.

The radar device 10 according to an embodiment may calculate a sum of phase offsets $\rho_n$ across the plurality of receive antennas.

In an embodiment, the radar device 10 may calculate sums $\beta_0, \beta_1, \beta_2, \beta_3$ of phase offsets $\rho_n$, which are estimated and stored in a database based on a test signal transmitted through a plurality of transmit antennas or received through a plurality of receive antennas, the phase offsets corresponding to connection paths between the plurality of transmit antennas and the plurality of receive antennas. The sums of the phase offsets sums $\beta_0, \beta_1, \beta_2, \beta_3$ may serve as reference values that can be calculated from the database.

[Equation 10]

$$\beta_0 = \rho_{0,0} + \rho_{1,1} + \rho_{2,2} + \rho_{3,3}$$
$$\beta_1 = \rho_{1,0} + \rho_{2,1} + \rho_{3,2} + \rho_{0,3}$$
$$\beta_2 = \rho_{2,0} + \rho_{3,1} + \rho_{0,2} + \rho_{1,3}$$
$$\beta_3 = \rho_{3,0} + \rho_{0,1} + \rho_{1,2} + \rho_{2,3}$$

For example, the sums of the phase offsets. $\beta_0$, $\beta_1$, $\beta_2$, $\beta_3$ may be as shown in **FIG. 10B**.

In an embodiment, in the R-V map, the number of hypotheses corresponding to the plurality of transmit antennas may be four in total (0, 1, 2, and 3). In an embodiment, according to the number of hypotheses for the plurality of transmit antennas, a sequence of sequential phase sums $\hat{\alpha}_0$, $\hat{\alpha}_1$, $\hat{\alpha}_2$, $\hat{\alpha}_3$, obtained by summing phase components at different positions corresponding to the respective hypotheses, may be expressed as follows.

[Equation 11]

$$\text{Hypothesis } 0 : [\hat{\alpha}_0, \hat{\alpha}_1, \hat{\alpha}_2, \hat{\alpha}_3]$$
$$\text{Hypothesis } 1 : [\hat{\alpha}_1, \hat{\alpha}_2, \hat{\alpha}_3, \hat{\alpha}_0]$$
$$\text{Hypothesis } 2 : [\hat{\alpha}_2, \hat{\alpha}_3, \hat{\alpha}_0, \hat{\alpha}_1]$$
$$\text{Hypothesis } 3 : [\hat{\alpha}_3, \hat{\alpha}_0, \hat{\alpha}_1, \hat{\alpha}_2]$$

For example, the sequence of sequential phase sums may be as shown in **FIG. 10C.**

The radar device 10 according to an embodiment may calculate a cost function based on the sequential phase sums and the hypotheses corresponding to the plurality of transmit antennas, and may match the received reflected signals with the plurality of transmit antennas based on the calculated cost function.

In an embodiment, the cost function is defined as a cross-correlation between two sequences: the sums of the phase offsets. $\beta_0$, $\beta_1$, $\beta_2$, $\beta_3$ and the sequential phase sums $\hat{\alpha}_0$, $\hat{\alpha}_1$, $\hat{\alpha}_2$, $\hat{\alpha}_3$ corresponding to the hypotheses for the plurality of transmit antennas, and may be calculated according to the following equation.

[Equation 12]

$$p_0 = [\beta_0, \beta_1, \beta_2, \beta_3] * [\hat{\alpha}_0, \hat{\alpha}_1, \hat{\alpha}_2, \hat{\alpha}_3] = \beta_0\hat{\alpha}_0 + \beta_1\hat{\alpha}_1 + \beta_2\hat{\alpha}_2 + \beta_3\hat{\alpha}_3$$
$$p_1 = [\beta_0, \beta_1, \beta_2, \beta_3] * [\hat{\alpha}_1, \hat{\alpha}_2, \hat{\alpha}_3, \hat{\alpha}_0] = \beta_0\hat{\alpha}_1 + \beta_1\hat{\alpha}_2 + \beta_2\hat{\alpha}_3 + \beta_3\hat{\alpha}_0$$
$$p_2 = [\beta_0, \beta_1, \beta_2, \beta_3] * [\hat{\alpha}_2, \hat{\alpha}_3, \hat{\alpha}_0, \hat{\alpha}_1] = \beta_0\hat{\alpha}_2 + \beta_1\hat{\alpha}_3 + \beta_2\hat{\alpha}_0 + \beta_3\hat{\alpha}_1$$
$$p_3 = [\beta_0, \beta_1, \beta_2, \beta_3] * [\hat{\alpha}_3, \hat{\alpha}_0, \hat{\alpha}_1, \hat{\alpha}_2] = \beta_0\hat{\alpha}_3 + \beta_1\hat{\alpha}_0 + \beta_2\hat{\alpha}_1 + \beta_3\hat{\alpha}_2$$

For example, the cost function may be as shown in **FIG. 10D.**

In an embodiment, the value of k at which the calculated cost function is minimized may be used to identify the true peak corresponding to the signal of the first transmit antenna Tx0, and the received reflected signals may finally be matched with the plurality of transmit antennas.

[Equation 13]

$$k : \underset{k}{\text{argmin}} \, p_k \qquad (0 \leq k \leq 3)$$

For example, as shown in **FIG. 10D,** it can be seen that among the four peaks, the peak (second peak) corresponding to Index 1 is the true peak corresponding to the transmission signal of the first transmit antenna Tx0. The velocity of the target estimated based on this true peak is -2 [m/s], which coincides with the actual target velocity of -2 [m/s]. That is, it was confirmed that the radar signal processing method applied to the radar device 10 of the present disclosure functions properly.

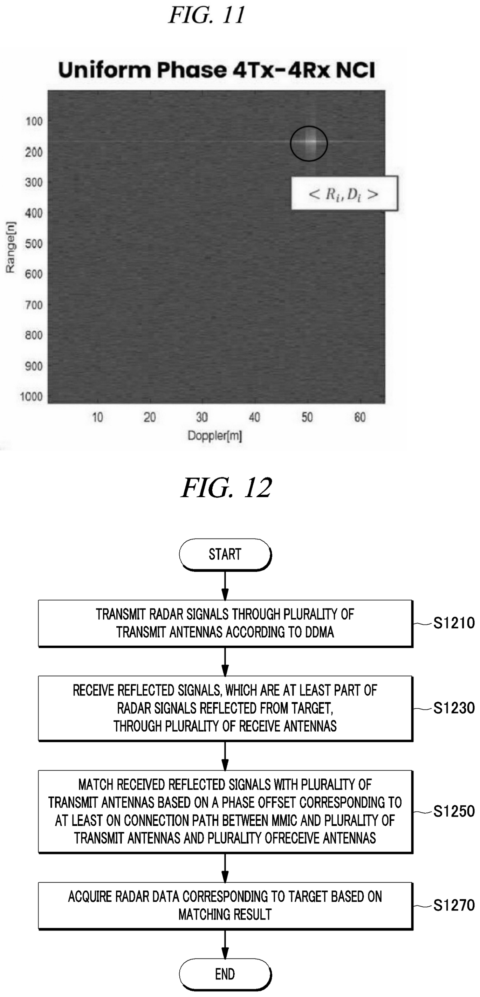

**FIG. 11** is an R-D Map showing 2D FFT data of reflected signals integrated in each of a transmit antenna and a receive antenna according to an embodiment of the present disclosure.

Referring to **FIG. 11,** the radar device 10 according to an embodiment may acquire radar data corresponding to a target based on the matching result between the received reflected signals and the plurality of transmit antennas.

The radar device 10 according to an embodiment may extract a frequency component of a range domain or a Doppler domain corresponding to a reflected signal based on the position of the estimated transmit antenna, and may obtain a distance to or a velocity of a target based on the extracted frequency component and the range resolution or the speed resolution.

In an embodiment, the radar device 10 may obtain a peak index $<R_i, D_i>$ including a range index $R_i$ and a Doppler index $D_i$ for a peak from the R-D Map obtained through 2D FFT. For example, the peak may be a result of NCI and/or CFAR.

In an embodiment, the frequency resolution with respect to the range axis and the Doppler axis in 2D FFT may be equal to the range resolution $\Delta R = \dfrac{c}{2B}$ , c may denote the velocity of light, B may denote a chirp bandwidth and the

speed resolution $\Delta V = \dfrac{\lambda}{2N_c T_c}$ , $\lambda$ may denote a wavelength, Nc may denote the number of chirps, and Tc may denote a pulse repetition interval (PRI).

In an embodiment, the radar device 10 may acquire the distance to and/or the velocity of the target from the product of the peak index and the range resolution and/or the speed resolution. For example, the distance to the target may be the product $R_i \cdot \Delta R$ of the range index and the range resolution, and the velocity of the target may be the product $D_i \cdot \Delta V$ of the Doppler index and the speed resolution.

Further, in order to increase the accuracy in the range and/or velocity, frequency estimation technique used for general range or speed estimation methods may be used. Since 2D FFT data are about a frequency axis, the accuracy can be improved by using various frequency estimation techniques.

**FIG. 12** is a flowchart showing a method of processing a radar signal according to an embodiment of the present disclosure.

Referring to **FIG. 12,** the method of processing a radar signal according to an embodiment may include an operation 1210 of transmitting radar signals through the plurality of transmit antennas Tx1, Tx2, Tx3 and Tx4 according to the DDMA.

The method of processing a radar signal according to an embodiment may include an operation 1230 of receiving reflected signals, which are at least a part of the radar signals reflected from a target, through the plurality of receive antennas Rx1, Rx2, Rx3 and Rx4.

The method of processing a radar signal according to an embodiment may include an operation 1250 of matching the received reflected signals with the plurality of transmit antennas Tx1, Tx2, Tx3 and Tx4 based on phase offsets corresponding to connection paths between the MMIC 100 and the plurality of transmit antennas Tx1, Tx2, Tx3 and Tx4 and receive antennas Rx1, Rx2, Rx3 and Rx4.

The method of processing a radar signal according to an embodiment may include an operation 1270 of acquiring radar data corresponding to the target based on the matching result.

In the method of processing a radar signal according to an embodiment, the operation 1250 of matching the received reflected signals with the plurality of transmit antennas Tx1, Tx2, Tx3 and Tx4 may include: an operation of applying an FFT to the received reflected signals to convert the reflected signals into frequency components in an R-D domain; and an operation of matching frequency data of the reflected signals, which have been converted into the R-D domain, with the physical arrangement of the plurality of transmit antennas Tx1, Tx2, Tx3 and Tx4 and the plurality of receive antennas Rx1, Rx2, Rx3 and Rx4 based on the phases of the reflected signals.

The method of processing radar signals in the radar device 10 described above can also be implemented in the form of a computer-readable medium containing a computer program or executable instructions stored on a computer-readable recording medium, executed by a computer. Moreover, the method of processing radar signals in the radar device 10 described above can also be implemented in the form of a computer program stored on a computer-readable medium, executed by a computer.

The computer-readable recording medium can be any available medium that can be accessed by a computer, including both volatile and non-volatile media, removable and non-removable media. Additionally, the computer-readable recording medium can include computer storage media. Computer storage media include all volatile and non-volatile, removable and non-removable media implemented in any method or technology for storing information such as computer-readable instructions, data structures, program modules, or other data.

The functions realized by the components described herein can be implemented in a processing circuitry that includes a general-purpose processor programmed to realize the described functions, a special-purpose processor, an integrated circuit, application-specific integrated circuits (ASICs), a central processing unit (CPU), circuits, and/or combinations thereof. The processor may include transistors or other circuitry and is considered a circuit or processing circuitry. The processor may also be a programmed processor that executes programs stored in memory.

In this specification, circuits, parts, units, and means are hardware or executing hardware programmed to realize the described functions. Such hardware can be any hardware disclosed in this specification or any known hardware programmed or executing to realize the described functions.

If the hardware is considered a processor type circuit, the circuit, part, means, or unit is a combination of hardware and software used to configure the hardware and/or processor.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

**EXPLANATION OF CODES**

10: Radar device

100: MMIC

110: VCO

120: PLL

130: PA

140: Transmit antenna circuit

150: Receive antenna circuit

160: LNA

170: MIXER

180: LPF

190: A/D

**Claims**

1. A radar device, comprising:

a plurality of transmit antennas;
a plurality of receive antennas; and
a monolithic microwave integrated circuit (MMIC) connected to the plurality of transmit antennas and the plurality of receive antennas, and configured to control the plurality of transmit antennas and the plurality of receive antennas,
wherein the MMIC is configured to:

transmit radar signals through the plurality of transmit antennas according to a Doppler division multiple access (DDMA);
receive reflected signals, which are at least a part of the radar signals reflected from a target, through the plurality of receive antennas;
match the received reflected signals with the plurality of transmit antennas based on a phase offset corresponding to at least one connection path between the MMIC and the plurality of transmit antennas and the plurality of receive antennas; and
acquire radar data corresponding to the target based on the matching result.

2. The radar device of Claim 1,
wherein the phase offset corresponding to the connection path is determined based on lengths of transmission paths between the plurality of transmit antennas and the MMIC and reception paths between the MMIC and the plurality of receive antennas.

3. The radar device of Claim 2,
wherein one of the plurality of transmit antennas has the transmission path designed to provide the phase offset corresponding to the connection path different from that of the other transmit antennas.

4. The radar device of Claim 1,
wherein the phase offset corresponding to the connection path is estimated based on a test signal transmitted through the plurality of transmit antennas or received through the plurality of receive antennas, and is stored in a database in advance.

5. The radar device of Claim 1,
wherein the MMIC is configured to:
calculate a sequential phase sum by summing phase components at different positions across the plurality of receive antennas to eliminate an influence of a phase delay caused by a physical distance between the plurality of transmit antennas and the plurality of receive antennas.

6. The radar device of Claim 5,
wherein the MMIC is configured to:

calculate a cost function based on the calculated sequential phase sum and hypotheses corresponding to the plurality of transmit antennas, and
match the received reflected signals with the plurality of transmit antennas based on the calculated cost function.

7. The radar device of Claim 1,
wherein the MMIC is configured to:

convert the received reflected signals into frequency components in a range-Doppler (R-D) domain by applying a Fast Fourier Transform (FFT) to the received reflected signals; and
match frequency data of the reflected signals, which have been converted into the R-D domain, with a physical arrangement of the plurality of transmit antennas and the plurality of receive antennas based on phases of the reflected signals.

8. A method of processing a radar signal, comprising:

transmitting radar signals through a plurality of transmit antennas according to a DDMA;
receiving reflected signals, which are at least a part of the radar signals reflected from a target, through a plurality of receive antennas;
matching the received reflected signals with the plurality of transmit antennas based on a phase offset corresponding to at least one connection path between an MMIC and the plurality of transmit antennas and the plurality of receive antennas; and
acquiring radar data corresponding to the target based on the matching result.

9. The method of Claim 8,
wherein the phase offset corresponding to the connection path is determined based on lengths of transmission paths between the plurality of transmit antennas and the MMIC and reception paths between the MMIC and the plurality of receive antennas.

10. The method of Claim 8,
wherein one of the plurality of transmit antennas is designed to provide the phase offset corresponding to the connection path different from that of the other transmit antennas.

11. The method of Claim 8,
wherein the phase offset corresponding to the connection path is estimated based on a test signal transmitted through the plurality of transmit antennas or received through the plurality of receive antennas, is stored in a database in advance.

12. The method of Claim 8,
wherein the matching the received reflected signals with the plurality of transmit antennas includes:
calculating a sequential phase sum by summing phase components at different positions across the plurality of receive antennas to eliminate an influence of phase delay caused by a physical distance between the plurality of transmit antennas and the plurality of receive antennas.

13. The method of Claim 12,
wherein the matching the received reflected signals with the plurality of transmit antennas further includes:

calculating a cost function based on the calculated sequential phase sum and hypotheses corresponding to the plurality of transmit antennas, and
matching the received reflected signals with the plurality of transmit antennas based on the calculated cost function.

14. The method of Claim 8,
wherein the matching the received reflected signals with the plurality of transmit antennas includes:

converting the received reflected signals into frequency components in an R-D domain by applying an FFT to the received reflected signals; and
matching frequency data of the reflected signals, which have been converted into the R-D domain, with a physical arrangement of the plurality of transmit antennas and the plurality of receive antennas based on phases of the reflected signals.

# FIG. 1

# FIG. 2

*FIG. 3A*

*FIG. 3B*

## FIG. 4A

DDMA R-D Map

## FIG. 4B

TDMA R-D Map

## FIG. 5A

**Uniform Phase 4Rx NCI**

## FIG. 5B

**Uniform Phase 4Tx-4Rx NCI**

## FIG. 5C

**Non-Uniform Phase 4Rx NCI**

## FIG. 5D

**Non-Uniform Phase 4Tx-4Rx NCI**

## FIG. 6A

## FIG. 6B

## FIG. 6C

## FIG. 7A

FIG. 7B

# FIG. 8A

# FIG. 8B

## FIG. 9

## FIG. 10A

*FIG. 10B*

*FIG. 10C*

## FIG. 10D

## FIG. 10E

## FIG. 11

Uniform Phase 4Tx-4Rx NCI

$< R_i, D_i >$

## FIG. 12

START

TRANSMIT RADAR SIGNALS THROUGH PLURALITY OF TRANSMIT ANTENNAS ACCORDING TO DDMA — S1210

RECEIVE REFLECTED SIGNALS, WHICH ARE AT LEAST PART OF RADAR SIGNALS REFLECTED FROM TARGET, THROUGH PLURALITY OF RECEIVE ANTENNAS — S1230

MATCH RECEIVED REFLECTED SIGNALS WITH PLURALITY OF TRANSMIT ANTENNAS BASED ON A PHASE OFFSET CORRESPONDING TO AT LEAST ON CONNECTION PATH BETWEEN MMIC AND PLURALITY OF TRANSMIT ANTENNAS AND PLURALITY OFRECEIVE ANTENNAS — S1250

ACQUIRE RADAR DATA CORRESPONDING TO TARGET BASED ON MATCHING RESULT — S1270

END

Europäisches
Patentamt
European
Patent Office
Office européen
des brevets

# EUROPEAN SEARCH REPORT

**Application Number**

EP 25 21 6667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 929 622 A1 (NXP USA INC [US]) 29 December 2021 (2021-12-29) * paragraphs [0001], [0003], [0005], [0006], [0018], [0019]; figures 1, 3, 4 * ----- | 1-14 | INV. G01S7/35 G01S13/32 G01S13/42 G01S13/58 |
| A | US 2024/369679 A1 (JEANNIN MAYEUL [DE] ET AL) 7 November 2024 (2024-11-07) * paragraphs [0038], [0050]; figure 1 * ----- | 1,8 | |
| A | US 2023/059523 A1 (CATTLE BRYAN [US] ET AL) 23 February 2023 (2023-02-23) * paragraphs [0130], [0174], [0175] * ----- | 1,5,8,12 | |
| A | US 2023/129203 A1 (PARK BYUNG KWON [KR] ET AL) 27 April 2023 (2023-04-27) * paragraphs [0003], [0021], [0022], [0050], [0057]; figure 4B * ----- | 1-14 | |
| A | JEANNIN MAYEUL ET AL: "Particular DDM codes for online phase shifter calibration in automotive MIMO radar", 2023 IEEE RADAR CONFERENCE (RADARCONF23) IEEE, 1 May 2023 (2023-05-01), pages 1-6, XP034361555, DOI: 10.1109/RADARCONF2351548.2023.10149703 [retrieved on 2023-06-21] * abstract; figure 9; table I * ----- | 1-14 | **TECHNICAL FIELDS SEARCHED (IPC)** G01S |

The present search report has been drawn up for all claims

| Place of search | Date of completion of the search | Examiner |
|---|---|---|
| Munich | 20 March 2026 | Kirscher, Jérôme |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................
& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 21 6667

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | | Publication date |
|---|---|---|---|---|---|
| EP 3929622 | A1 | 29-12-2021 | CN | 113848530 A | 28-12-2021 |
| | | | EP | 3929622 A1 | 29-12-2021 |
| | | | US | 2021405151 A1 | 30-12-2021 |
| US 2024369679 | A1 | 07-11-2024 | DE | 102023204161 A1 | 07-11-2024 |
| | | | US | 2024369679 A1 | 07-11-2024 |
| US 2023059523 | A1 | 23-02-2023 | CA | 3120294 A1 | 28-05-2020 |
| | | | CN | 113661412 A | 16-11-2021 |
| | | | EP | 3884297 A2 | 29-09-2021 |
| | | | IL | 283284 A | 29-07-2021 |
| | | | JP | 2022507777 A | 18-01-2022 |
| | | | KR | 20210093967 A | 28-07-2021 |
| | | | US | 2020158861 A1 | 21-05-2020 |
| | | | US | 2023059523 A1 | 23-02-2023 |
| | | | US | 2025199163 A1 | 19-06-2025 |
| | | | WO | 2020106849 A2 | 28-05-2020 |
| US 2023129203 | A1 | 27-04-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240165491

- US 20220334240 A1